# EUROPÄISCHE PATENTANMELDUNG

(11) **EP 1 492 325 A1**
(43) Veröffentlichungstag der Anmeldung: **29.12.2004**
(21) Anmeldenummer: 03101848.4
(22) Anmeldetag: 24.06.2003
(51) Int. Cl.: H04N 1/195

(54) **Vorrichtung und Verfahren zum Aufbelichten von in einzelne Pixel aufgeteilten Bildinformationen auf lichtempfindliches Material**

(71) Anmelder: Agfa-Gevaert AG, 51373 Leverkusen (DE)
(72) Erfinder: Klüter, Ulrich, Dr., 80339, München (DE); Münch, Reimund, Dr., 81543, München (DE); Grosskloss, Ralf, Dr., 81825, München (DE); Hartmann, Thomas, Dr., 82449, Uffing/Staffelsee (DE)

(57) **Zusammenfassung**

Die Erfindung geht aus von einer Vorrichtung und einem Verfahren zum Aufbelichten von in einzelne Pixel aufgeteilten Bildinformationen auf lichtempfindliches Material (12), mit einem Bildgenerator (1) zum Erzeugen von monochromen Teilbildern in verschiedenen Belichtungsfarben und mit einer optischen Abbildungseinrichtung (4). Erfindungsgemäß ist eine Einrichtung (7) zum seitlichen Versetzen des Abbildes des Bildgenerators (1) in der Ebene des lichtempfindlichen Materials vorgesehen. Weiterhin weist die erfindungsgemäße Vorrichtung Mittel auf, mit denen die Einrichtung (7) zum seitlichen Versetzen in Abhängigkeit von der Belichtungsfarbe gesteuert wird.

## Beschreibung

Die Erfindung betrifft eine Vorrichtung bzw. Verfahren zum Aufbelichten von in einzelne Pixel aufgeteilten Bildinformationen auf lichtempfindliches Material gemäß dem Oberbegriff von Anspruch 1 bzw. dem Oberbegriff von Anspruch 10.

Bei der Abbildung einer Bildinformation auf ein lichtempfindliches Material ist man bestrebt, die Flächen-Auflösung des Bildes zu maximieren. Dies ist insbesondere dann von Bedeutung, wenn die bildgebende Vorrichtung elektronisch arbeitet. Bei den elektronischen bildgebenden Vorrichtungen wird die Bildinformation in Form einzelner Pixel durch Anzeige- oder Bildelemente zusammengesetzt, wobei die Anzeige- oder Bildelemente einzeln elektronisch ansteuerbar sind. Diese elektronischen, bildgebenden Vorrichtungen weisen bei vertretbaren Kosten jedoch eine Auflösung auf, die für Abbildungen hoch aufgelöster Bilder in fotografischer Qualität nicht ausreichend ist.

Es soll daher eine Auflösung des auf dem lichtempfindlichen Material erzeugten Bildes erreicht werden, die höher als die Auflösung eines solchen Bildgenerators, beispielsweise einer LCD-Einrichtung ist. Zu diesem Zweck werden die Bilddaten in mehrere inhaltliche Teilbilder aufgeteilt. Die Vorrichtung ist dann so aufgebaut, dass mit jeder Belichtung eines der inhaltlichen Teilbilder auch nur ein Teil der Fläche des lichtempfindlichen Materials belichtet wird. Dies lässt sich unter anderem dadurch erreichen, dass ein Teil eines jeden LCD-Elements durch eine Maske abgedeckt wird. Die bei der Belichtung eines ersten inhaltl i-chen Teilbildes nicht belichteten Bereiche des lichtempfindlichen Materials werden mit den folgenden Belichtungen der restlichen Teilbilder belichtet. Auf diese Weise wird jedes LCD-Element mehrmals auf unterschiedlichen Bereichen des lichtempfindlichen Materials ― jeweils mit unterschiedlicher Bildinformation ― abgebildet. Es entsteht dabei in der Bildebene ein flächendeckendes Bild mit einem Vielfachen der Auflösung der LCD-Einrichtung. Der geschilderte Vorgang bezieht sich auf ein monochromes Teilbild der gesamten Bildinformation. Um ein farbiges Abbild zu erhalten, muss dieser Vorgang für alle Belichtungsfarben durchgeführt werden.

Dieses Verfahren zur Auflösungserhöhung wird bei Geräten angewandt, die Bildinformationen mit Hilfe einer LCD- (liquid crystal device), einer DMD- (digital mirror device) Anzeigevorrichtung oder einem sonstigen Lichtmodulator auf ein lichtempfindliches Material wie Fotopapier abbilden.

Bei einer LCD-Vorrichtung weisen die einzelnen LCD-Elemente einen schwarz abgedeckten Bereich (Black Matrix) auf, der bei scharfer Abbildung auf dem Fotopapier zu einer Belichtungslücke führt. Versetzt man die Abbildung des LCDs auf das Fotopapier entsprechend, so kann man die Belichtungslücken durch Ansteuerung des LCDs mit den noch fehlenden Bilddaten füllen. Auf diese Weise lässt sich aus mehreren Teilbildern ein komplettes Bild mit hoher Auflösung erzeugen. Die Black Matrix der LCD-Vorrichtung deckt beispielsweise drei Viertel der LCD-Fläche ab, In diesem Fall grenzt an jede Seite des aktiven Teils eines jeden LCD-Elements ― sowohl in vertikaler als auch in horizontaler Richtung ― eine schwarze Fläche, die die gleiche Fläche wie der aktive Teil des LCD-Elements hat.

Spaltet man nun die Daten eines hochaufgelösten Bildes in vier elektronische inhaltliche Teilbilder auf und erzeugt mit der LCD-Vorrichtung z.B. die Punkte mit gerader Nummerierung in x-Richtung (0, 2, 4..) und gerader Nummerierung in y-Richtung (0, 2, 4..) als ein erstes Teilbild, die Punkte mit gerader Nummerierung in x-Richtung (0, 2, 4..) und ungerader Nummerierung in y-Richtung (1, 3, 5..) als ein zweites Teilbild, die Punkte mit ungerader Nummerierung in x-Richtung (1, 3, 5..) und ungerader Nummerierung in y-Richtung (1, 3, 5..) als ein drittes Teilbild und die Punkte mit ungerader Nummerierung in x-Richtung (1, 3, 5..) und gerader Nummerierung in y-Richtung (0, 2, 4..) als ein viertes Teilbild, so lässt sich durch die sukzessive Belichtung der vier Teilbilder die Auflösung des Bildes in der Photoschicht gegenüber der Auflösung der LCD-Vorrichtung vervierfachen. Hat die LCD-Vorrichtung z.B. 1600 x 1200 Elemente, so ergibt sich auf diese Art ein belichtetes Bild mit 3200 x 2400 Bildpunkten. Voraussetzung für dieses Verfahren ist selbstverständlich, dass die eigentlichen Bilddaten wenigstens in dieser Auflösung vorliegen.

Aus der EP 0 987 875 ist ein Verfahren zur Wiedergabe eines digitalen Bildes bekannt, wobei im wesentlichen eine LCD-Vorrichtung mittels eines Objektivs auf einen Bildträger abgebildet wird. Mit einer drehbaren Glasplatte wird ein seitlicher Versatz der abgebildeten Pixel in der Bildebene erzeugt und der Bildträger einmal oder mehrmals bei jeder Verschiebung belichtet.

Bei solchen bekannten Vorrichtungen hat sich nun herausgestellt, dass die Überdeckung der monochromen Teilbilder mitunter nicht die Genauigkeit erreicht, die notwendig ist, um bei einem Betrachter der erzeugten Bilder einen brillanten Gesamteindruck entstehen zu lassen.

Es war deshalb die Aufgabe der Erfindung, die Genauigkeit bei der Überlagerung der einzelnen monochromen Teilbilder in den verschiedenen Belichtungsfarben so zu verbessern, dass eine Verschiebung der monochromen Teilbilder gegeneinander nicht erkennbar wird.

Gelöst wird die Aufgabe erfindungsgemäß durch eine Vorrichtung und ein Verfahren mit den kennzeichnenden Merkmalen von Anspruch 1 bzw. Anspruch 10. Bevorzugte Ausführungsformen sind Gegenstand der Unteransprüche.

Die erfindungsgemäße Lösung beruht auf der Erkenntnis, dass bei einer optischen Verschiebung des Abbildes des Bildgenerators in unterschiedlichen Belichtungsfarben unterschiedliche optische Weglängen vorherrschen. Erfindungsgemäß wird daher die Einrichtung, die den Versatz des Abbildes des Bildgenerators in der Bildebene bewirkt, in Abhängigkeit von der jeweiligen Belichtungsfarbe gesteuert. Das bedeutet, dass der Versatz jedes monochromen Teilbildes so gesteuert wird, dass er identisch ist mit dem Versatz der monochromen Teilbilder des selben inhaltlichen Teilbildes in den anderen Belichtungsfarben.

Bei einer möglichen Ausführungsform ist im Randbereich eines Bildgenerators ein Einzelelement einer Anordnung aus mehreren Sensorpunkten in der Bildebene außerhalb des Bereichs zugeordnet, der für das lichtempfindliche Material vorgesehen ist. Bei jedem Umschalten der Belichtungsfarbe wird nun geprüft an welche Stelle in der Belichtungsebene das Abbild dieses Prüfelements versetzt wird. Die Einrichtung zum Versetzen des Abbildes des Bildgenerators kann dann so angesteuert werden, dass das Abbild des Prüfelements an den dafür vorgesehenen Sensorpunkt versetzt wird.

Bevorzugt werden aber feste Korrekturfaktoren verwendet, die auf das System abgestimmt und nur einmal ermittelt werden müssen. Mit Hilfe dieser Korrekturfaktoren lassen sich die unterschiedlichen optischen Weglängen für verschiedene Wellenlängen kompensieren, so dass sich auch bei dieser Ausführungsform die inhaltlichen Teilbilder in allen Belichtungsfarben genau überdecken.

Durch die Anordnung von zwei, im Strahlengang hintereinander angeordneten, schwenkbaren optischen Elementen, deren Schwenkachsen rechtwinklig zueinander ausgerichtet sind, ist eine Verschiebung des Abbilds des Bildgenerators auf der lichtempfindlichen Schicht in jede beliebige Richtung möglich. Eine Verschiebung des Abbildes in x-Richtung wird somit von dem einen optischen Element und die Verschiebung in y-Richtung von dem anderen optischen Element bewerkstelligt. Mit einfachen Mitteln lässt sich die Bewegung der schwenkbaren optischen Elemente exakt ausführen, so dass die Abbildung der Pixel auf der lichtempfindlichen Schicht mit hoher Genauigkeit reproduzierbar ist.

Die Verwendung von zwei unabhängigen Motoren zur Bewegung der optischen Elemente eröffnet die Möglichkeit, die Abbildungen des Bildgenerators in jede beliebige Richtung um eine beliebige Strecke zu verschieben. Das hat den Vorteil, dass in einem Kalibrier-Modus ein anderer Versatz der einzelnen Pixel als während des eigentlichen Print-Vorganges realisierbar ist.

Im Kalibrier-Modus sollen fehlerhafte (zu helle oder zu dunkle) Elemente des Bildgenerators lokalisiert werden, um die Bilddaten vor dem Belichtungsvorgang mit entsprechenden Korrekturalgorithmen beaufschlagen zu können. Hierzu ist es notwendig, die fehlerhaften Elemente des Bildgenerators möglichst auffällig und gut detektierbar darzustellen. Die seitliche Verschiebung der Abbildung des Bildgenerators wird daher so gesteuert, dass die einzelnen Abbilder jedes Elements in der Bildebene jeweils direkt nebeneinander belichtet werden. Bei einer Vervierfachung der Auflösung des Bildgenerators entsteht auf diese Weise für jedes Element ein Makropixel mit vierfacher Größe. Ein fehlerhaftes Element wird so gut sichtbar.

Fällt dagegen zwischen zwei Kalibriervorgängen ein Element des Bildgenerators aus, so soll das defekte Element in den Bildern möglichst wenig auffallen. Für die Belichtung von Bilddaten wird daher die Verschiebung der Abbildung des Bildgenerators so gesteuert, dass die einzelnen Abbildungen jedes einzelnen Elements weiter auseinander liegen. Auf diese Weise ergibt sich kein gut sichtbares Makropixel, sondern eine der Anzahl der Verschiebungen entsprechende Zahl kleiner, mit bestimmtem Abstand voneinander entfernter Pixel, die mit bloßem Auge kaum erkennbar sind.

Dadurch dass die Abbildung des Bildgenerators in jede beliebige Richtung um eine beliebige Strecke verschoben werden kann, lässt sich der Abbildungsvorgang so steuern, dass ein defektes Element des Bildgenerators in den Bildern möglichst wenig auffällt. Für die Belichtung von Bilddaten wird daher die Verschiebung der Abbildung so gesteuert, dass die Abbildungen jedes einzelnen Elements in den verschiedenen inhaltlichen Teilbildern nicht direkt nebeneinander sondern weiter auseinander liegen. Auf diese Weise ergibt sich eine der Anzahl der Verschiebungen entsprechende Zahl kleiner, voneinander beabstandeter Bildpunkte, die mit bloßem Auge kaum erkennbar sind.

Bei einem bevorzugten Ausführungsbeispiel werden die optischen Elemente von Steuerscheiben bewegt, die jeweils von einem eigenen Motor angetrieben werden. Jedem monochromen Teilbild ist auf diesen Steuerscheiben eine feste Position zugeordnet.

Die unterschiedlichen inhaltlichen Teilbilder werden in allen Belichtungsfarben auf das lichtempfindliche Material aufbelichtet. Geht man von vier inhaltlichen Teilbildern aus, werden für jedes dieser vier inhaltlichen Teilbilder monochrome Teilbilder in jede Belichtungsfarbe, also z. B. jeweils in Blau, Grün, und Rot erzeugt. Für das Aufbelichten eines kompletten Bildes werden dadurch zwölf einzelne Belichtungsvorgänge notwendig.

In vorteilhafter Weise sind auf der Steuerkurve jeder Steuerscheibe jeweils sechs Kurvenabschnitte vorgesehen, die einen unterschiedlichen Abstand zum Drehpunkt aufweisen, wobei alle Punkte eines Kurvenabschnittes gleich weit vom Drehpunkt entfernt sind. Die sechs Kurvenabschnitte können etwa gleichmäßig auf den Umfang der Steuerscheiben verteilt sein, so dass der Antrieb der Steuerscheiben durch preiswerte Schrittmotoren mit geringer Anforderung an die Positioniergenauigkeit erfolgen kann.

Da eine Kurvenscheibe für die Verschiebung des Abbildes des Bildgenerators in x-Richtung und die zweite Kurvenscheibe für die Verschiebung in y-Richtung verantwortlich ist, müssen bei einer Aufteilung der Bilddaten auf vier inhaltliche Teilbilder auf jeder Kurvenscheibe nur Positionen für zwei inhaltliche Teilbilder vorgesehen sein. Weil aber jedes inhaltliche Teilbild wiederum in drei monochrome Teilbilder aufgeteilt ist, die jeweils eine andere Stellung der Kurvenscheibe erfordern, ist die Steuerkurve einer jeden Kurvenscheibe in die bereits oben beschriebenen sechs Kurvenabschnitte unterteilt.

Die Kurvenscheiben steuern den Kippwinkel von zwei planparallelen Glasplatten, wobei durch die eine Glasplatte wiederum die Verschiebung des Abbildes des Bildgenerators in x-Richtung und durch die andere Glasplatte die Verschiebung in y-Richtung stattfindet.

Weitere Merkmale und Vorteile der Erfindung ergeben sich aus der folgenden Beschreibung von bevorzugten Ausführungsformen, wobei Bezug genommen wird auf die beigefügten Zeichnungen.

Es zeigen:
- Fig. 1: den Strahlengang in einer Ausführungsform der erfindungsgemäßen Vorrichtung,
- Fig. 2: einen Abbildungsvorgang nach dem Stand der Technik,
- Fig. 3: einen Abbildungsvorgang nach einer Ausführungsform der Erfindung,
- Fig. 4: ein weiteres Ausführungsbeispiel einer erfindungsgemäßen Vorrichtung und
- Fig. 5: ein Detail des in Fig. 4 gezeigten Antriebs.

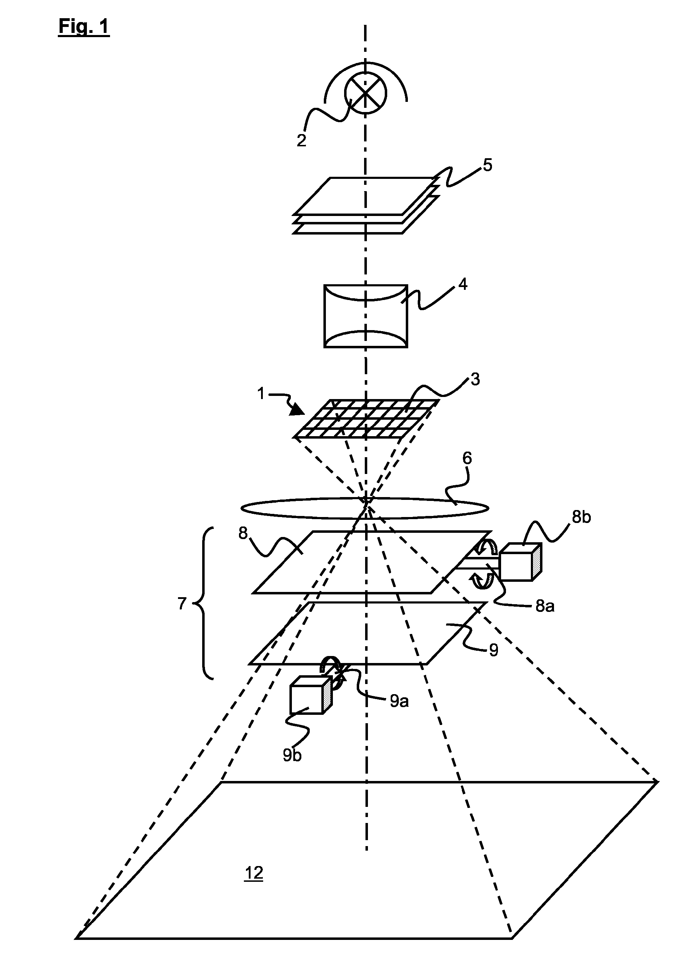

In Fig. 1 ist teilweise perspektivisch der Aufbau einer erfindungsgemäßen Vorrichtung gezeigt, die zum Aufbelichten von Bildinformation auf eine lichtempfindliche Schicht verwendet wird. Als Bildgenerator wird in dem gezeigten Ausführungsbeispiel ein transmissives Element, nämlich eine LCD-Vorrichtung benutzt. Es wäre aber ebenso möglich andere transmissive Elemente oder aber ein reflektives Element, wie z. B. ein DMD (Digital Micromirror Device) einzusetzen. Zur Orientierung ist die optische Achse der Abbildungsoptik als strichpun k-tierte Linie in Fig. 1 gezeigt.

Mit einer LCD-Vorrichtung 1 wird ein Muster dargestellt, das mit einer Lichtquelle 2 belichtet wird. Das Muster auf der LCD-Vorrichtung 1 wird mit einzelnen LCD-Elementen 3 erzeugt, die einzeln ansteuerbar und in nicht dargestellter Weise mit einer Black-Matrix zum Teil abgedeckt sind. Um die Auflösung der Abbildung gegenüber der Auflösung der verwendeten LCD-Vorrichtung 1 zu vervierfachen, sind von jedem LCD-Element 3 Dreiviertel seiner Fläche durch die Black-Matrix abgedeckt.

Das Licht der Lampe 2 wird durch die einzeln einschwenkbaren Filter 5 angefärbt. Der Kondensor 4 richtet das Licht, so dass die LCD-Vorrichtung mit hartem Licht beaufschlagt werden kann.

Alternativ zu einer Lampe mit Farbfiltern kann das für die Abbildung notwendige farbige Licht auch mit LEDs erzeugt werden. Es spielt hierbei keine Rolle ob ein gemischtfarbiges LED-Array verwendet wird oder ob das Licht mehrerer verschiedenfarbiger LED-Arrays in dem Strahlengang vereinigt wird.

Durch eine Abbildungsoptik 6 wird das auf der LCD-Vorrichtung 1 erzeugte Muster auf das Fotopapier 12 abgebildet.

Zwischen der Abbildungsoptik 6 und der lichtempfindlichen Schicht des Fotopapiers 12 ist eine Einrichtung 7 zum seitlichen Versetzen des Abbildes der einzelnen LCD-Elemente 3 angeordnet.

Die Einrichtung 7 umfasst zwei schwenkbare planparallele Glasplatten 8 und 9. Die beiden Glasplatten 8 und 9 sind im Strahlengang hintereinander zwischen der Abbildungsoptik 6 und der Bildebene, in der sich die lichtempfindliche Schicht des Fotopapiers 12 befindet, angeordnet.

Die Glasplatten 8 bzw. 9 sorgen dafür, dass der Strahlengang je nach Stellung des optischen Elements definiert parallel versetzt wird. Das bedeutet, dass das Abbild eines jeden LCD-Elements 3 in der Ebene des Fotopapiers 12 in einem größeren Bereich um eine beliebige Strecke mit beliebigem Winkel verschoben werden kann. Dies lässt sich durch das Kippen der beiden planparallelen Glasplatten 8 und 9 erreichen. Während die Stellung der Glasplatte 8 für den Anteil der Verschiebung in y-Richtung verantwortlich ist, bewirkt das Kippen der Glasplatte 9 eine Verschiebung in x-Richtung. Durch die Kombination unterschiedlicher Kippwinkel der beiden Glasplatten lässt sich folglich jede beliebige Verschiebung realisieren.

Die schräg gestellten, planparallelen Glasplatten 8 und 9 haben vorzugsweise eine Dicke von 1 bis 2 mm. Ihre Mitte fällt mit der optischen Achse des Aufbaus zusammen. Da somit keine zusätzlichen optischen Elemente mit definiert gekrümmten Oberflächen notwendig sind, ist die Anordnung kostengünstig zu realisieren.

Die beiden Glasplatten 8 und 9 sind schwenkbar gelagert und werden durch Antriebseinrichtungen 8b und 9b um ihre jeweilige Schwenkachse gekippt. Die Schwenkachsen sind mit 8a bzw. 9a bezeichnet. Die Antriebseinrichtungen (8b und 9b) sind weiter unten noch detailliert beschrieben.

Da die Bildelemente einer LCD-Vorrichtung eine rechteckige Fläche haben, liegen die Schwenkachsen 8a und 9a parallel zu den Grundlinien der LCD-Elemente 3 und sind rechtwinklig zueinander ausgerichtet. Um eine Verzeichnung zu verhindern, sind die Schwenkachsen 8a und 9a in zueinander parallelen Ebenen angeordnet, die von der optischen Achse des Strahlengangs im rechten Winkel geschnitten werden. Beide Schwenkachsen schneiden diese optische Achse.

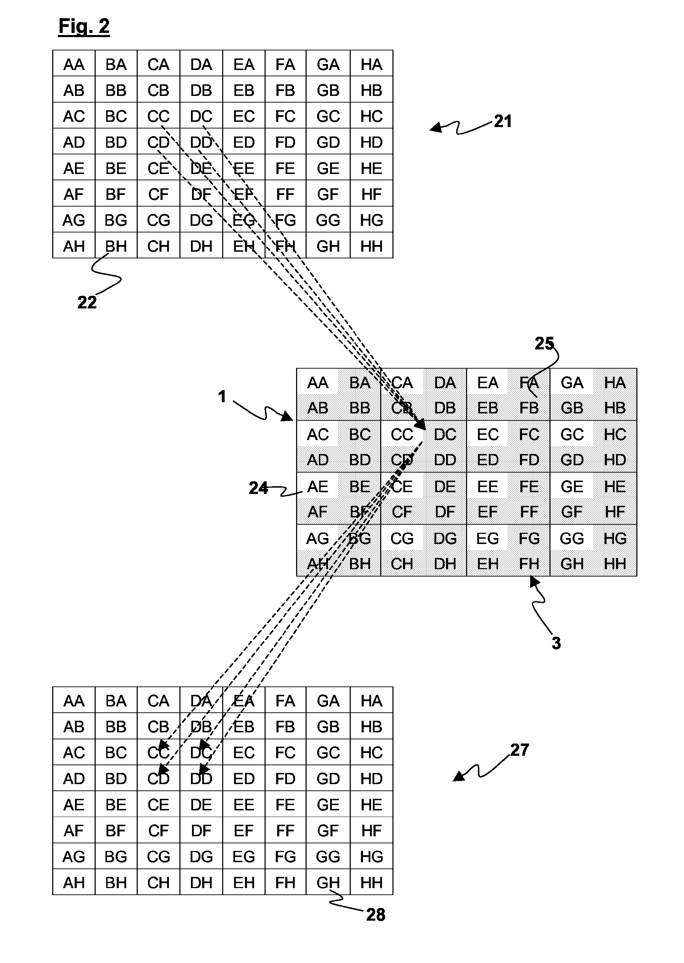

In Figur 2 ist mit dem Bezugszeichen 21 eine Speicherebene bezeichnet, in der die hochaufgelösten Bilddaten abgespeichert sind. Die Speicherebene 21 enthält eine Vielzahl von Speicherzellen 22. Die Information in den Speicherzellen 22 wird zur Ansteuerung der LCD-Vorrichtung 1 verwendet, genauer zur Ansteuerung der Vielzahl von LCD-Elementen 3, aus der die LCD-Vorrichtung 1 besteht.

In dem gezeigten Ausführungsbeispiel wird nacheinander immer nur ein Viertel der Bilddaten der Speicherebene 21 gleichzeitig durch die LCD-Vorrichtung 1 dargestellt. Die Bilddaten jeweils eines einzelnen Pixels sind mit Buchstabenkombinationen bezeichnet, wobei der erste Buchstabe die Spalte und der zweite Buchstabe die Zeile der Matrix kennzeichnet. Ein erstes Teilbild besteht aus allen Pixeln, deren dafür notwendige Bilddaten mit Buchstabenkombinationen bezeichnet sind, wobei der erster Buchstabe A, C, E oder G und der zweiter Buchstabe ebenfalls A, C, E oder G ist. Für ein zweites Teilbild werden die Bilddaten mit den ersten Buchstaben B, D, F oder H und den zweiten Buchstaben A, C, E oder G verwendet. Das dritte Teilbild benutzt Bilddaten mit Buchstabenkombinationen deren erster als auch zweiter Buchstabe ein B, D, F oder H ist, während die Bilddaten für das vierte Teilbild als ersten Buchstaben ein A, C, E oder G und als zweiten Buchstaben ein B, D, F oder H aufweisen.

Mit der Lichtquelle 2 und der Abbildungsoptik 6 (siehe Fig. 1) wird das durch die LCD-Vorrichtung 1 generierte Teilbild auf das lichtempfindliches Papier 12 projiziert. Die LCD-Elemente 3 der LCD-Vorrichtung 1 sind zu drei Viertel ihrer Fläche durch eine Black Matrix 25 abgedeckt, die bei der Abbildung auf das lichtempfindliche Papier zu einer Belichtungslücke führt. Das aktive Viertel eines jeden LCD-Elements 3 ist mit dem Bezugszeichen 24 versehen.

Um die Teilbilder nacheinander in der Bildebene erzeugen zu können, ohne dass sie sich überlappen, umfasst die Vorrichtung daher ein Einrichtung 7 für die Verschiebung des Projektionsbildes 27 um die Breite und/oder Höhe eines Bildpunktes 28 des Projektionsbildes 27. Die Verschiebung des projizierten inhaltlichen Teilbildes erfolgt entsprechend dem jeweiligen inhaltlichen Teilbild in vertikaler und/oder horizontaler Richtung. Um die Abfolge der inhaltlichen Teilbilder zu verdeutlichen sind in den LCD-Elementen 3 der LCD-Vorrichtung 1 jeweils alle Bilddaten aus den Speicherzellen 22 bezeichnet, die mit diesem LCD-Element verarbeitet werden.

Das Projektionsbild 27 setzt sich aus einzelnen Bildpunkten 28 zusammen die entsprechend den Bilddaten in den Speicherzellen 22 benannt sind.

Wenn eines der mehreren LCD-Elemente 3 der LCD-Vorrichtung 1 zu hell oder zu dunkel ist, führt dies zur falschen Darstellung aller mit diesem LCD-Element dargestellten Bildpunkte. Bei dem zum Kalibrieren vorgesehenen Verfahren, das in Fig. 2 dargestellt ist, werden somit bei einem fehlerhaften LCD-Element entsprechend große fehlerhafte Bildpunkte in dem Projektionsbild 27 erzeugt, die sich gut feststellen und somit ausgleichen lassen. Ist also beispielsweise das LCD-Element in der zweiten Spalte und der zweiten Zeile der LCD-Vorrichtung 1 fehlerhaft, welches mit den Bilddaten CC, DC,DD und CD angesteuert wird, so ergibt sich in dem Projektionsbild 27 eine Fehlstelle, die den Bildpunkten CC, DC, DD und CD entspricht. Diese Fehlstelle kann ausgemessen und über einen entsprechenden Kalibrieralgorithmus ausgeglichen werden.

Während der normalen Bilderproduktion sollen solche fehlerhaften oder sogar defekten LCD-Elemente aber gerade nicht in dem Projektionsbild 27 sichtbar werden Es wird deshalb im Produktionsmodus jeder Bildpunkt 28 in dem Projektionsbild 27 von einem LCD-Element 3 der LCD-Vorrichtung 1 erzeugt, das keinen der Nachbar-Bildpunkte dieses Bildpunktes erzeugt hat.

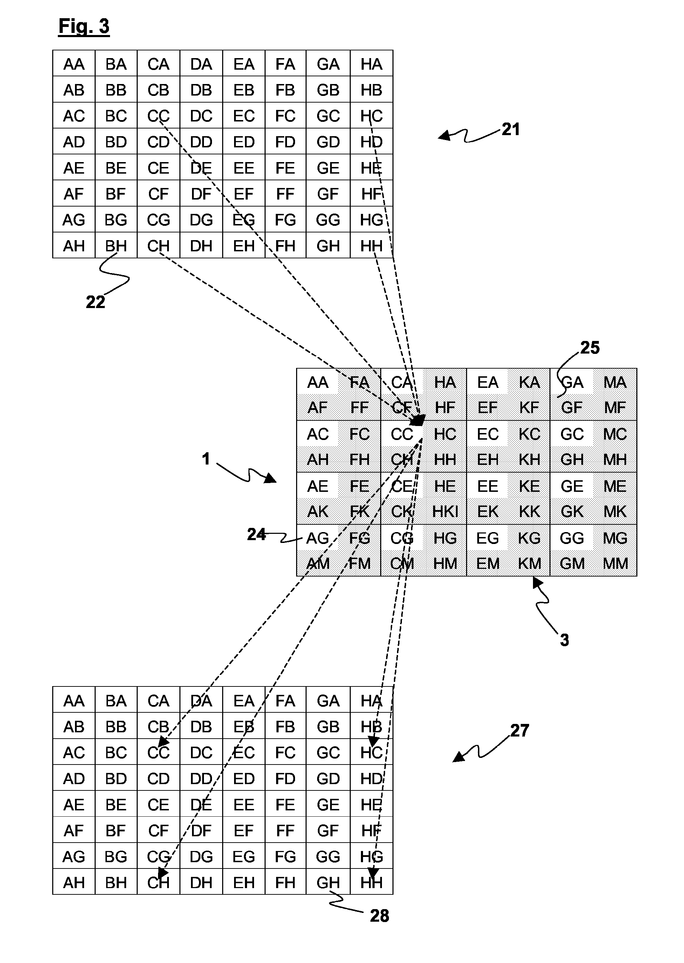

Zur Veranschaulichung des Verfahrens ist in Fig. 3 ein Teil der Bilddaten eines Bildes in der Speicherebene 21 dargestellt. Die Bilddaten in den einzelnen Speicherzellen 22 sind wiederum wie in Fig. 2 bezeichnet.

Die LCD-Vorrichtung 1 ist ebenfalls nur ausschnittsweise, ähnlich wie die Speicherebene 21, dargestellt. Auch in Fig. 3 sind in der Black-Matrix 25 und in dem aktiven Viertel 24 die Bildpunkte bezeichnet, die durch das jeweilige LCD-Element 3 aufbelichtet werden.

Bevorzugt wird die Bildinformation wieder in vier inhaltliche Teilbilder aufgeteilt. Für das erste inhaltliche Teilbild werden ― genau wie bei dem in Fig. 2 beschriebenen Verfahren ― diejenigen Bilddaten verwendet, die aus einer Kombination der Buchstaben A, C, E oder G bestehen. Das zweite inhaltliche Teilbild verwendet Bilddaten mit Buchstabenkombinationen aus einem ersten Buchstaben F, H, K oder M und einem zweiten Buchstaben A, C, E oder G. Das dritte inhaltliche Teilbild benutzt Bilddaten mit Buchstabenkombinationen deren erster als auch zweiter Buchstabe ein F, H, K oder M ist, während die Bilddaten für das vierte inhaltliche Teilbild als ersten Buchstaben ein A,C,E oder G und als zweiten Buchstaben ein F, H, K oder M aufweisen.

Die Belichtung des ersten inhaltlichen Teilbildes wird wie in dem Beispiel nach Fig. 2 durchgeführt. Für die Belichtung des zweiten inhaltlichen Teilbildes wird die Projektion dieses Teilbildes in die Bildebene 12 nun aber nicht um die Breite eines Bildpunktes 28 sondern um die Breite von fünf Bildpunkten in horizontaler Richtung verschoben. Bei der Verschiebung muss es sich um eine ungerade Anzahl von Bildpunkten handeln. Das gleiche gilt für die Belichtung des dritten inhaltlichen Teilbildes, wobei eine Verschiebung in vertikaler Richtung stattfindet. In dem gezeigten Ausführungsbeispiel wird das Projektionsbild des dritten inhaltlichen Teilbildes um einen Betrag der fünffachen Höhe eines Bildpunktes gegenüber dem Projektionsbild des zweiten inhaltlichen Teilbildes verschoben.

Es könnte jedoch auch eine Verschiebung um ein anderes ungerades Vielfaches der Höhe eines Bildpunktes vorgenommen werden. Die Verschiebung in vertikaler und horizontaler Richtung muss nicht die gleiche Anzahl von Bildpunkten betragen. Für das vierte inhaltliche Teilbild findet dann wieder eine Verschiebung in horizontaler Richtung um den gleichen Betrag aber entgegengesetzt zur Verschiebung für das zweite inhaltliche Teilbild statt.

Die einzelnen inhaltlichen Teilbilder werden nacheinander belichtet und erzeugen so eine Abfolge von Abbildungen, die dann das monochrome Gesamtbild 27 ergeben. Bei der Belichtung der einzelnen inhaltlichen Teilbilder wird die jeweilige Verschiebung der Bilddaten aus den Speicherzellen 22 der Speicherebene 21 bei der Übertragung an die LCD-Vorrichtung 1 durch die Verschiebung rückgängig gemacht, so dass in der Bildebene genau das Bild entsteht, das in der Speicherebene 21 abgelegt ist, d.h. die Reihenfolge und Anordnung der Bildpunkte 28 entspricht exakt den in den Speicherzellen 22 der Speicherebene 21 abgelegten Bilddaten.

Wie in Fig. 2 wird auch in Fig. 3 wieder davon ausgegangen, dass das LCD-Element in der zweiten Spalte der zweiten Zeile der LCD-Vorrichtung 3 beispielsweise defekt ist. Mit diesem defekten LCD-Element würden normalerweise die Bilddaten CC, HC, HH und CH aufbelichtet. Da die Anordnung im Speicher auch der Anordnung der resultierenden Bildpunkte in dem belichteten Bild 7 entspricht, liegen die durch das defekte LCD-Element erzeugten schwarzen Bildpunkte CC, HC, HH und CH nicht in direkter Nachbarschaft sondern sind entsprechend voneinander beabstandet. So liegt der fehlerhafte Bildpunkt CC fünf Spalten links von dem fehlerhaften Bildpunkt HC, fünf Zeilen über dem fehlerhaften Bildpunkt CH und fünf Zeilen über und fünf Spalten links von dem fehlerhaften Bildpunkt HH.

Damit wird erreicht, dass der durch das fehlerhafte LCD-Element verursachte Bildfehler auf vier kleine auseinander liegende Punkte verteilt wird, die für das Auge weniger störend sind als ein Bildfehler, der sich ergeben würde, wenn im Produktionsmodus genauso wie in dem in Fig. 2 gezeigten Kalibriermodus verfahren werden würde.

In der Beschreibung von Fig. 1 und 2 wurde davon ausgegangen, dass Bilddaten aus vier Speicherzellen 2 mit einem LCD-Element 6 dargestellt werden. Selbstverständlich können jedoch auch Bilddaten beispielsweise aus sechs, acht, neun, zwölf, oder sechzehn Speicherzellen 2 mit ehem LCD-Element 6 dargestellt werden. In diesen Fällen werden nicht vier sondern entsprechend sechs, acht, neun, zwölf, oder sechzehn Teilbilder erzeugt. Auch hier soll der Abstand der Bildpunkte 8, die durch ein LCD-Element erzeugt werden, so gewählt werden, dass bei einem defekten LCD-Element die erzeugten Bildpunkte vom Auge nicht als ein zusammenhängender Bildpunkt wahrgenommen werden.

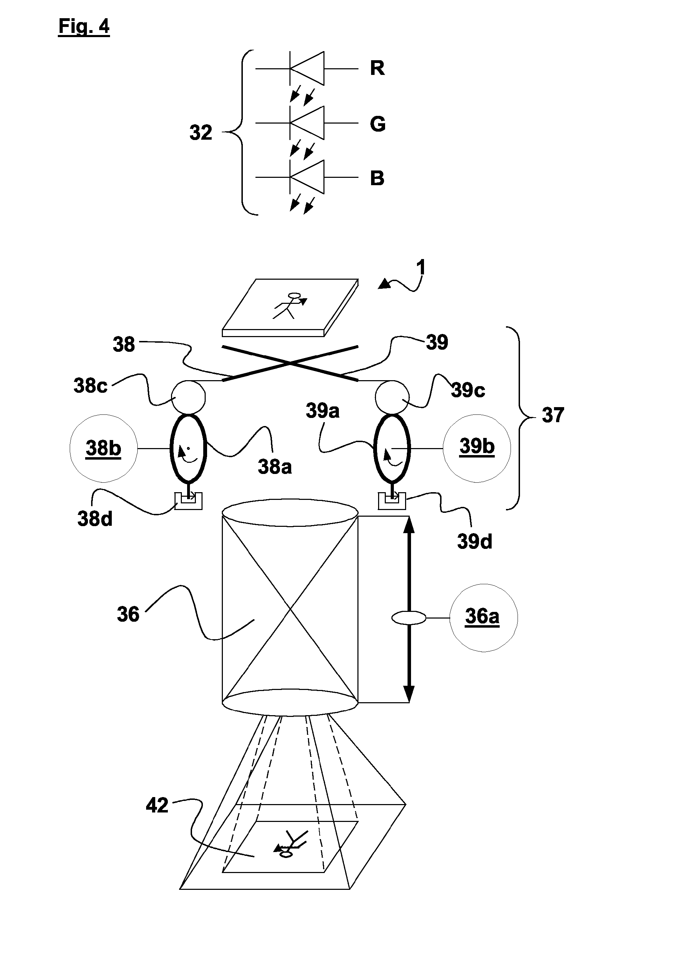

Auch bei dem in Fig. 4 gezeigten Ausführungsbeispiel werden zum Versetzen der inhaltlichen Teilbilder zwei Glasplatten 38, 39 verwendet. Die gesamte Vorrichtung 37 zum Versetzen des Abbildes der LCD-Vorrichtung 1 besteht aus den beiden planparallelen Glasplatten 38, 39, den Steuerscheiben 38a, 39a, den Steuerscheibenantrieben 38b, 39b, die als Schrittmotore ausgebildet sind, den Steuerelementen 38c, 39c und den Nullpunktsensoren 38d, 39d.

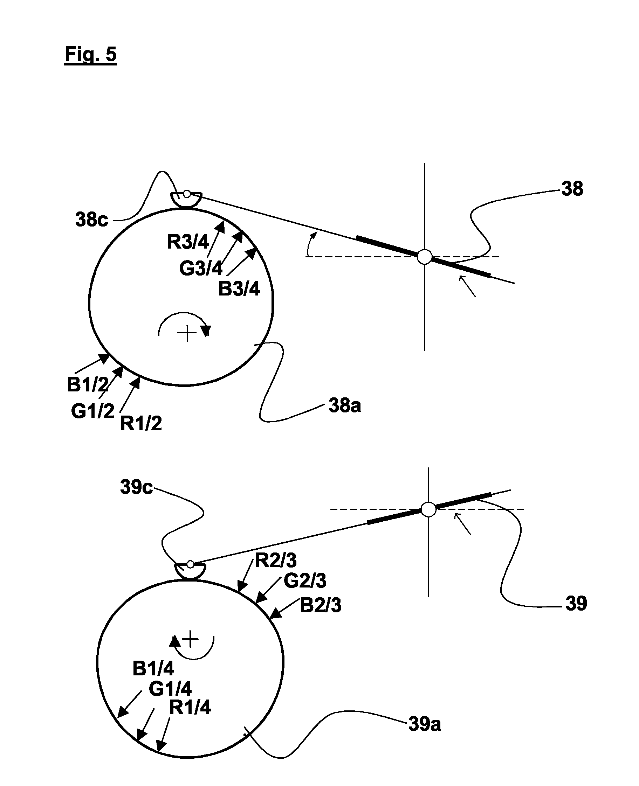

Der Zusammenhang zwischen Drehwinkel/Schrittanzahl der Motore 38b und 39b und dem Kippwinkel der Glasplatten 38 und 39 ist durch die Form der Steuerscheiben festgelegt. Aufgrund des starken Untersetzungsverhältnisses zwischen dem Drehwinkel des Motors und dem Kippwinkel der Glasplatte ist eine Feinjustage des Strahlengangs möglich. Die Feinjustage ist notwendig, um ggf. Fertigungstoleranzen zu kompensieren. Bei dieser Feinjustage werden auf den beiden Steuerscheiben 38a und 39a die Punkte B3/4, G3/4, R3/4, B1/2, G1/2, R1/2, B2/3, G2/3, R2/3, B1/4, G1/4 und R1/4 festgelegt (s. Fig. 5).

Das durch die LCD-Vorrichtung 1 erzeugte Bild wird über ein Zoom-Objektiv 36 mit dem Verstell-Antrieb 36a abgebildet. Als Lichtquelle dient ein LED-Lampenhaus 32 mit roten, grünen und blauen schnell schaltbaren LEDs. Es spielt hierbei keine Rolle, ob die LEDs in einer farblich gemischten Anordnung z. B. auf einer Platine angebracht sind, oder ob verschieden farbige einzelne LED-Anordnungen vorgesehen sind, deren Licht über Spiegel zusammengeführt wird. Das in der Papierebene erzeugte Bild ist mit dem Bezugszeichen 42 versehen.

Fig. 5 zeigt die Ansteuerung der Glasplatten im Detail. Bei diesem Ausführungsbeispiel wird von der Aufteilung eines Bildes in vier inhaltliche Teilbilder ausgegangen, die jeweils durch eine blaue, eine grüne und eine rote Belichtung erzeugt werden. Es ist jedoch auch eine Aufteilung in eine andere Anzahl von inhaltlichen Teilbildern möglich. Dazu müssten jedoch die Steuerscheiben anders ausgebildet sein.

Zu Beginn des Belichtungsvorganges für ein Bild werden die Steuerscheben 38a und 39a in eine definierte Stellung bewegt, die mit Hilfe der beiden Nullpunktsensoren 38d und 39d gefunden wird. Daraufhin werden die Schrittmotore 38b und 39b so angesteuert, dass das Steuerelement 38c die Oberfläche der Steuerscheibe 38a am Punkt B1/2 und das Steuerelement 39c die Oberfläche der Steuerscheibe 39a am Punkt B1/4 berührt. Bei dieser Stellung der Glasplatten 38 und 39 wird das erste inhaltliche Teilbild in der Farbe Blau aufbelichtet.

Für die nächste Belichtung des selben inhaltlichen Teilbildes in der Farbe Grün müssen die Steuerscheiben 38a und 39a nur um einen geringen Betrag weiter gedreht werden. Dies ist jedoch notwendig, um gewährleisten zu können, dass das grüne erste inhaltliche Teilbild an exakt die gleiche Position wie das zuvor aufbelichtete blaue erste inhaltliche Teilbild belichtet wird. Der kleine Drehwinkel zu den Punkten G1/2 und G1/4 sowie die schnell umschaltbare Lichtquelle 32 stellen sicher, dass die farblich unterschiedlichen Belichtungen in sehr kurzen zeitlichen Abständen erfolgen können.

Für die Belichtung des ersten inhaltlichen Teilbildes in der Farbe Rot muss das Steuerelement 38c auf dem Punkt R1/2 der Steuerscheibe 38a und das Steuerelement 39c auf dem Punkt R1/4 der Steuerscheibe 39a aufliegen. Mit dieser roten Teilbelichtung ist die Belichtung des ersten inhaltlichen Teilbildes in allen drei Farben abgeschlossen.

Um nun das zweite inhaltliche Teilbild aufbelichten zu können, wird die Steuerscheibe 38a zurück gedreht, so dass das Steuerelement 38c wiederum auf dem Punkt B1/2 aufliegt. Dagegen wird die Steuerscheibe 39a um etwa 180° weiter gedreht, bis das Steuerelement 39c die Steuerscheibe 39a im Punkt B2/3 berührt. In dieser Position wird die Belichtung des zweiten inhaltlichen Teilbildes in der Farbe Blau vorgenommen.

Für die Belichtung der zweiten inhaltlichen Teilbilder in den Farben Grün und Rot werden die Steuerscheiben wieder analog zur Belichtung des ersten inhaltlichen Teilbildes zu den Punkten G1/2 und R1/2 beziehungsweise G2/3 und R2/3 gedreht.

Zur Belichtung des dritten inhaltlichen Teilbildes werden dann auf der Steuerscheibe 38a die Punkte B3/4, G3/4 und R3/4 sowie auf der Steuerscheibe 39a nochmals die Punkte B2/3, G2/3 und R2/3 benötigt. Nun wird für die erste blaue Belichtung die Steuerscheibe 38a um etwa 180° weiter gedreht, während diesmal die Steuerscheibe 39a nur zurück gedreht werden muss.

Bei der Belichtung des vierten inhaltlichen Teilbildes sind auf der Steuerscheibe 38a wiederum die Punkte B3/4, G3/4 und R3/4 maßgeblich, während auf der Steuerscheibe 39a die gleichen Punkte B1/4, G1/4 und R1/4 wie für das erste inhaltliche Teilbild benötigt werden.

Hierzu **5** Blatt Zeichnungen

## Patentansprüche

1. Vorrichtung zum Aufbelichten von in einzelne Pixel aufgeteilten Bildinformationen auf lichtempfindliches Material (12), mit einem Bildgenerator (1) zum Erzeugen von monochromen Teilbildern in verschiedenen Belichtungsfarben und mit einer optischen Abbildungseinrichtung (4), **dadurch gekennzeichnet, dass** eine Einrichtung (7) zum seitlichen Versetzen des Abbildes des Bildgenerators (1) in der Ebene des lichtempfindlichen Materials vorgesehen ist und dass die Vorrichtung Mittel aufweist, mit denen die Einrichtung (7) zum seitlichen Versetzen in Abhängigkeit von der Belichtungsfarbe gesteuert wird.

2. Vorrichtung nach Anspruch 1, **dadurch gekennzeichnet, dass** die Mittel, mit denen die Einrichtung (7) zum seitlichen Versetzen in Abhängigkeit von der Belichtungsfarbe gesteuert wird, Korrekturfaktoren verwenden, die eine Kompensation unterschiedlicher optischer Weglängen in den verschiedenen Belichtungsfarben bewirken.

3. Vorrichtung nach Anspruch 1, **dadurch gekennzeichnet, dass** die Einrichtung (7) zum seitlichen Versetzen zwei im Strahlengang hintereinander angeordnete, optische Elemente (8, 9) aufweist, wobei jedes der optischen Elemente (8, 9) bewegbar ist.

4. Vorrichtung nach Anspruch 3, **dadurch gekennzeichnet; dass** die optischen Elemente (8, 9) über Schwenkachsen (8a, 9a) kippbar sind, die rechtwinklig zueinander ausgerichtet sind.

5. Vorrichtung nach Anspruch 3 oder 4, **dadurch gekennzeichnet, dass** die optischen Elemente (8, 9) durch voneinander unabhängige Motoren bewegbar sind.

6. Vorrichtung nach Anspruch 5, **dadurch gekennzeichnet, dass** die Antriebe der optischen Elemente (8, 9) jeweils eine Steuerscheibe aufweisen, wobei jedem monochromen Teilbild eine Position auf der Steuerscheibe zugeordnet ist.

7. Vorrichtung nach Anspruch 6, **dadurch gekennzeichnet, dass** auf der Steuerkurve jeder Steuerscheibe 6 Punkte vorgesehen sind, die unterschiedliche Abstände zum Drehpunkt der Steuerscheibe aufweisen.

8. Vorrichtung nach Anspruch 4, **dadurch gekennzeichnet, dass** die optischen Elemente (8, 9) durch planparallele Glasplatten gebildet werden.

9. Vorrichtung nach Anspruch 1, **dadurch gekennzeichnet, dass** als Bildgenerator eine LCD-Vorrichtung verwendet wird.

10. Verfahren zum Aufbelichten von in einzelne Pixel aufgeteilten Bildinformationen auf lichtempfindliches Material (12), bei dem monochrome Teilbilder in verschiedenen Belichtungsfarben durch einen Bildgenerator (1) einzeln erzeugt und nacheinander auf das lichtempfindliche Material aufbelichtet werden, **dadurch gekennzeichnet, dass** Abbilder des Bildgenerators (1) in der Ebene des lichtempfindlichen Materials (12) seitlich versetzt werden und dass der Versatz in Abhängigkeit von der Belichtungsfarbe gesteuert wird.

11. Verfahren nach Anspruch 10, **dadurch gekennzeichnet, dass** die in einzelne Pixel aufgeteilten Bildinformationen der monochromen Teilbilder in eine Vielzahl von inhaltlichen Teilbildern aufgeteilt und diese Teilbilder für jede Belichtungsfarbe mit seitlichem Versatz auf das lichtempfindliche Material (12) aufbelichtet werden.

12. Verfahren nach Anspruch 11, **dadurch gekennzeichnet, dass** in einem ersten Schritt ein erstes inhaltliches Teilbild in einer Belichtungsfarbe aufbelichtet wird und in weiteren Schritten das erste inhaltliche Teilbild in weiteren Belichtungsfarben aufbelichtet wird.
